# EUROPÄISCHE PATENTSCHRIFT

(11) **EP 3 605 007 B1**
(45) Veröffentlichungstag und Bekanntmachung des Hinweises auf die Patenterteilung: **08.12.2021**
(21) Anmeldenummer: 18187118.7
(22) Anmeldetag: 02.08.2018
(51) Int. Cl.: G01B 7/02, G01B 7/04

(54) **KABELLÄNGENMESSSYSTEM**
CABLE LENGTH MEASURING SYSTEM
SYSTÈME DE MESURE DE LONGUEUR DE CÂBLE

(43) Veröffentlichungstag der Anmeldung: 05.02.2020
(73) Patentinhaber: iPEK International GmbH, 87477 Sulzberg (DE)
(72) Erfinder: ZAHND, Fabian, 87448 Waltenhofen (DE)
(74) Vertreter: 2s-ip Schramm Schneider Bertagnoll Patent- und Rechtsanwälte Part mbB

(56) Entgegenhaltungen:
- EP-A1- 3 239 650
- DE-A1- 2 319 290
- DE-A1-102010 040 853
- DE-B- 1 181 320

## Beschreibung

### Gebiet der Erfindung

Die Erfindung betrifft ein Kabellängenmesssystem sowie ein Verfahren zum Ermitteln einer Länge eines Kabels.

### Hintergrund der Erfindung

Wenn Schäden an einem Rohrleitungssystem (z.B. Rohre oder Kanäle) auftreten, ist es notwendig die defekte Stelle, wie beispielsweise ein Leck oder eine Verstopfung, genau zu orten, um den Schaden dann beheben zu können. Da Rohrleitungssysteme meist in Wänden oder unterirdisch verlegt sind, ist es jedoch schwierig, die Position der defekten Stelle genau zu bestimmen.

Zur Lokalisierung (Positionsbestimmung) einer schadhaften Stelle in einem Rohrleitungssystem oder auch zur Inspektion von Rohren, um deren Zustand zu überprüfen, sind im Stand der Technik Rohr- bzw. Kanalinspektionssysteme bekannt, bei welchen ein Kabelende mit einem Kamerasystem (z.B. ein Kamerakopf eines Schiebesystems oder ein Fahrwagen mit einer Kamera) versehen ist. Das Kamerasystem (oder andere bzw. weitere Sensoren) nimmt den Innenraum des Rohres auf und überträgt die Bilddaten (oder andere Sensordaten) über das Kabel an eine Anzeigeeinheit. Somit kann ein Rohr von Innen betrachtet werden und eine schadhafte Stelle ausfindig gemacht werden. Auch andere Hohlräume wie Schächte, Schornsteine können mittels derartiger Systeme inspiziert werden.

Das Kabel kann auf einer Kabeltrommel aufgewickelt sein und wird beim Vorschub des Kamerasystems von der Kabeltrommel abgewickelt. Über die von der Kabeltrommel abgewickelte Länge des Kabels kann die Distanz vom Schacht bis zur Schadstelle gemessen werden. Hierzu ist es bekannt über Drehgeber in der Kabeltrommel oder Messräder, die am Kabel anliegen, die von der Kabeltrommel abgewickelte Länge des Kabels zu ermitteln. Über den Drehwinkel und den Umfang der Kabeltrommel/des Messrades kann die Strecke, um die das Kabel bewegt wurde, ermittelt werden.

Bei dieser Art der Messung zeigt sich bereits der größte Nachteil dieses Systems. Für eine korrekte Messung der Länge des Kabels vom Einsetzpunkt (z.B. Schacht) bis zur Schadstelle (oder jeden anderen beliebigen Punkt in dem Rohr/Kanal) muss der Meterzähler auf "Null" gesetzt werden bzw. der Startwert gespeichert werden. Schlupf am Messrad, der z.B. durch Feuchtigkeit, Verschmutzung, Vibrationen etc. entstehen kann, kann die Messung verfälschen - dies kann auch nicht korrigiert werden, da ein absoluter Bezug fehlt und ein Schlupf bzw. der Grad des Schlupfes nicht ermittelt werden kann. Außerdem kann es vorkommen, dass die Inspektion aus irgendeinem Grund unterbrochen wird (z.B. bei Neustart wegen Änderung der Konfiguration, Stromausfall, etc...) und dadurch alle Bewegungen am Kabel, die in dieser Zeit gemacht werden (Umbau, Schlaufenbildung entfernen, etc.) nicht erfasst werden.

Ein weiterer Nachteil ist, dass der Messwert, wenn dieser über den Drehwinkel der Kabeltrommel bestimmt wird, sehr ungenau ist. Die unterschiedlichen Durchmesser der übereinanderliegenden Kabellagen können nur angenähert erfasst werden. Hier muss in einigen Fällen zur Positionsbestimmung das Kabel markiert und manuell nachgemessen werden.

Aus der EP 3 239 650 A1 ist eine Kabeltrommel mit Kabellängenmesssystem bekannt.

### Aufgabe der Erfindung

Daher liegt der Erfindung die Aufgabe zugrunde, eine Kabeltrommel mit einem Kabellängenmesssystem bereitzustellen, mit denen eine verbesserte Bestimmung einer Länge eines Kabels, insbesondere eines Teilabschnittes eines Kabels, ermöglicht wird, um beispielsweise eine exakte Positionsbestimmung eines mit einer Bildaufnahmevorrichtung ausgestatteten Kabelendes innerhalb eines Hohlraumes (z.B. Rohe oder Kanal) zu ermöglichen.

### Erfindungsgemäße Lösung

Erfindungsgemäß wird diese Aufgabe gemäß Anspruch 1 durch eine Kabeltrommel mit einem Kabellängenmesssystem gelöst. Vorteilhafte Ausgestaltungen der Erfindung sind in den jeweiligen abhängigen Ansprüchen angegeben.

Unter "Einkoppeln eines Impulses in ein Kabel" wird in diesem Zusammenhang auch das Beaufschlagen eines Kabels mit einem Impuls verstanden. "Einkoppeln" und "Beaufschlagen" sind als gleichwirkend zu verstehen.

Unter "Empfangen eines Impulses" werden auch das Auskoppeln eines Impulses aus dem Kabel und das Detektieren eines Impulses verstanden.

Ein Impuls umfasst auch ein Signal, d.h. zum Messen einer Länge zumindest eines Teilabschnittes eines elektrisch leitfähigen Kabels können vom Impulsgeber auch ein Signal in das Kabel eingekoppelt bzw. das Kabel mit einem Signal beaufschlagt werden und von dem Impulsempfänger das eingekoppelte Signal ausgekoppelt bzw. empfangen / detektiert werden.

Unter einem Kabel wird ein elektrisch leitfähiges Material ggf. mit einer Isolierung (z.B. Kabelmantel) verstanden. Das Kabel muss hierbei nicht notwendigerweise für die Übertragung von Informationen ausgelegt sein. Einzige Voraussetzung ist lediglich, dass sich der in das Kabel eingekoppelte Impuls in dem Kabel ausbreiten kann. Dennoch kann das Kabel auch für die Datenübertragung zwischen einer Inspektionseinheit und einer außerhalb des Kanals angeordneten Kontrolleinrichtung ausgelegt sein. Zudem kann das Kabel auch genutzt werden, eine in dem Kanal angeordnete Inspektionseinheit mit elektrischer Energie zu versorgen.

In einer Ausgestaltung der Erfindung kann die Reflektoreinrichtung durch das Kabelende selbst gebildet werden. Damit kann mit Hilfe
- der ersten Koppeleinrichtung, die den Impulsgeber aufweist, und der zweiten Koppeleinrichtung, die den Impulsempfänger aufweist, oder
- der ersten Koppeleinrichtung, die sowohl den Impulsgeber als auch den Impulsempfänger aufweist (nicht beansprucht),
auch die Impulslaufzeit vom Impulsgeber zum Kabelende und zurück zum Impulsempfänger gemessen werden. Unter Berücksichtigung der Impulslaufzeit zwischen Impulsgeber und Impulsempfänger (die in dem Fall, dass die erste Koppeleinrichtung sowohl den Impulsgeber als auch den Impulsempfänger aufweist, Null oder nahezu Null ist) kann so die Länge des Kabels zwischen dem Kabelende und dem Impulsempfänger ermittelt werden.

In einer Ausgestaltung der Erfindung kann die Reflektoreinrichtung eine aktive Reflektoreinrichtung sein, die angepasst ist, den von dem Impulsgeber in das Kabel eingekoppelten Impuls zu empfangen und den empfangenen Impuls in das Kabel einzukoppeln.

Vorteilhaft kann es sein, wenn die aktive Reflektoreinrichtung angepasst ist, den empfangenen Impuls zu verstärken und den verstärkten Impuls in das Kabel einzukoppeln. Dadurch können Dämpfungen der eingekoppelten und reflektierten Impulse ausgeglichen werden, sodass der reflektierte Impuls vom Impulsempfänger eindeutig als Impuls erkannt werden kann.

In einer Ausgestaltung der Erfindung kann die aktive Reflektoreinrichtung einen Impulsgeber und einen Impulsempfänger aufweisen. Der Impulsgeber und der Impulsempfänger einer aktiven Reflektoreinrichtung müssen nicht mit der Auswerteeinrichtung gekoppelt sein. In bestimmten Fällen kann es aber dennoch vorteilhaft sein, auch den Impulsgeber und/oder den Impulsempfänger einer aktiven Reflektoreinrichtung mit der Auswerteeinrichtung zu koppeln.

In einer Ausgestaltung der Erfindung kann die Reflektoreinrichtung eine passive Reflektoreinrichtung sein, die angepasst ist, an einer vorbestimmten Stelle im Kabel eine Impedanzänderung hervorzurufen.

Erfindungsgemäß ist das Kabellängenmesssystem an einer Kabeltrommel angeordnet, derart, dass das Kabel beim Abwickeln von der Trommel und/oder beim Aufwickeln auf die Trommel an mindestens einer Koppeleinrichtung vorbei oder durch mindestens eine Koppeleinrichtung hindurch geführt werden kann, derart, dass die mindestens eine Koppeleinrichtung den Impuls in das Kabel einkoppeln und/oder auskoppeln kann oder den Impuls reflektieren kann.

Bereit gestellt wird also eine erfindungsgemäße Kabeltrommel zum Auf- und Abwickeln eines elektrisch leitfähigen Kabels, wobei an der Kabeltrommel ein Kabellängenmesssystem angeordnet ist, wobei zumindest eine der Koppeleinrichtungen des Kabellängenmesssystems so an der Kabeltrommel angeordnet ist, dass das Kabel beim Abwickeln von der Trommel und/oder beim Aufwickeln auf die Trommel an dieser Koppeleinrichtung vorbei oder durch diese Koppeleinrichtung hindurch geführt wird.

Eine der Koppeleinrichtungen kann operativ mit dem nicht abwickelbaren Ende des Kabels gekoppelt sein.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
Fig. 1 ein Kabel mit einer daran angeordneten Koppeleinrichtung eines nicht-beanspruchten Kabellängenmesssystems;
Fig. 2 ein Kabel mit zwei daran angeordneten Koppeleinrichtungen eines nicht-beanspruchten Kabellängenmesssystems;
Fig. 3 die Änderung eines in ein Kabel eingekoppelten Impulses über die Zeit;
Fig. 4 ein Inspektionssystem mit einer erfindungsgemäßen Kabeltrommel mit einem Kabellängenmesssystem;
Fig. 5 eine Ausführungsform einer Koppeleinrichtung einer erfindungsgemäßen Kabeltrommel mit einem Kabellängenmesssystem; und
Fig. 6 einen Inspektionswagen eines Inspektionssystems mit einer aktiven Reflektoreinrichtung eines an einer erfindungsgemäßen Kabeltrommel angeordneten Kabellängenmesssystems;

### Detaillierte Beschreibung der Erfindung

Die Erfindung sieht vor, dass das Kabellängenmesssystem mindestens einen Impulsgeber und einen Impulsempfänger aufweist, wobei sich das Kabel, dessen Länge gemessen werden soll, relativ zum Impulsgeber oder relativ zum Impulsempfänger bewegt. Bewegt sich das Kabel relativ zum Impulsgeber bedeutet das, dass die Längen der Teilabschnitte des Kabels bezogen auf den Impulsgeber von dem Impulsgeber zum einen Ende des Kabels und von dem Impulsgeber zum anderen Ende des Kabels variieren. Beim Bewegen des Kabels relativ zum Impulsgeber wird der eine Teilabschnitt kürzer und der andere Teilabschnitt länger. Entsprechendes gilt, wenn das Kabel relativ zum Impulsempfänger bewegt wird.

Mit dem Impulsgeber wird ein Impuls (oder ein Signal) in das Kabel eingekoppelt bzw. das Kabel mit einem Impuls (oder mit einem Signal) beaufschlagt (bei einer kontinuierlichen Längenmessung werden kontinuierlich Impulse / Signal eingekoppelt).

Mit dem Impulsempfänger wird ein in das Kabel eingekoppelter Impuls (oder ein Signal) aus dem Kabel ausgekoppelt bzw. empfangen / detektiert.

Ein in das Kabel eingekoppelter Impuls wird am Kabelende oder an Nahtstellen, Verjüngungen, oder Fehlerstellen des Kabels aufgrund einer dort vorhandenen Änderung der Impedanz reflektiert bzw. teilreflektiert. Erfindungsgemäß wird eine solche Impedanzänderung mittels einer Reflektoreinrichtung hervorgerufen, die am abwickelbaren Ende des Kabels angeordnet ist. Die Reflektoreinrichtung kann aber auch angepasst sein, einen Impuls auszukoppeln und ihn wieder einzukoppeln, vorzugsweise nachdem der ausgekoppelte Impuls verstärkt wurde.

Die Ausbreitungsgeschwindigkeit des Impulses im Kabel, die vom Dielektrikum abhängt, wird hier als bekannt vorausgesetzt.

Erfindungsgemäß können der Impulsgeber, der Impulsempfänger und die Reflektoreinrichtung wie folgt am Kabel angeordnet werden. Wie vorstehend erwähnt, weist das erfindungsgemäße Kabellängenmesssystem mindestens einen Impulsgeber und mindestens einen Impulsempfänger auf.
a) Das Kabellängenmesssystem weist einen Impulsgeber und einen Impulsempfänger auf (also keine Reflektoreinrichtung). Ein Messsystem ohne Reflektoreinrichtung ist aber nicht beansprucht.
   (1) In einer Ausgestaltung ist der Impulsgeber galvanisch getrennt zum Kabel am Kabel angeordnet, sodass die Impulse von dem Impulsgeber galvanisch getrennt in die elektrisch leitfähigen Teile (Adern) des Kabels eingekoppelt werden. Impulse können so auch durch eine Isolierung (z.B. Kabelmantel) hindurch in das Kabel eingekoppelt werden, selbst wenn sich das Kabel relativ zum Impulsgeber bewegt.
      Der Impulsempfänger ist hingegen galvanisch mit dem Kabel gekoppelt, z.B. an dem nicht von einer Kabeltrommel abwickelbaren Ende des Kabels oder an einem Bereich des Kabel, der nicht bewegt wird.
   (2) In einer andern Ausgestaltung ist der Impulsempfänger galvanisch getrennt zum Kabel am Kabel angeordnet, sodass die eingekoppelten Impulse galvanisch getrennt aus dem Kabel ausgekoppelt bzw. empfangen / detektiert werden, selbst wenn sich das Kabel relativ zum Impulsempfänger bewegt.
      Der Impulsgeber ist hingegen galvanisch mit dem Kabel gekoppelt, z.B. an dem nicht von einer Kabeltrommel abwickelbaren Ende des Kabels oder an einem Bereich des Kabel, der nicht bewegt wird.
   (3) In einer weiteren Ausgestaltung sind sowohl der Impulsgeber als auch der Impulsempfänger galvanisch getrennt zum Kabel am Kabel angeordnet, sodass die Impulse von dem Impulsgeber galvanisch getrennt in des Kabels eingekoppelt und von dem Impulsempfänger galvanisch getrennt ausgekoppelt bzw. empfangen werden.
b) Das Kabellängenmesssystem weist einen Impulsgeber, einen Impulsempfänger und eine Reflektoreinrichtung auf.
   (4) In einer Ausgestaltung der Erfindung können der Impulsgeber und/oder der Impulsempfänger galvanisch getrennt am Kabel angeordnet sein (entsprechend der vorstehend unter (1) bis (3) beschriebenen Variaten), zumindest der Impulsempfänger oder zumindest der Impulsgeber sind galvanisch getrennt am Kabel angeordnet.
      Die Reflektoreinrichtung ist hingegen galvanisch mit dem Kabel gekoppelt, z.B. an einer vorbestimmten Stelle des Kabels oder an einem Kabelende.
   (5) In einer weiteren Ausgestaltung der Erfindung ist die Reflektoreinrichtung galvanisch getrennt am Kabel angeordnet.
      Der Impulsempfänger und der Impulsgeber sind hingegen galvanisch mit dem Kabel gekoppelt. Dies ist aber nicht beansprucht.
   (6) In einer noch weitern Ausgestaltung der Erfindung sind die Reflektoreinrichtung, der Impulsgeber und der Impulsempfänger galvanisch getrennt am Kabel angeordnet.

Erfindungsgemäß weist das Kabellängenmesssystem mindestens eine erste Koppeleinrichtung und eine zweite Koppeleinrichtung auf. Die beiden Koppeleinrichtung können wir folgt ausgestaltet sein:
- die eine Koppeleinrichtung weist den Impulsgeber auf und die andere Koppeleinrichtung weist den Impulsempfänger auf, oder, aber nicht beansprucht,
- die eine Koppeleinrichtung weist den Impulsgeber und den Impulsempfänger auf, und die andere Koppeleinrichtung weist die Reflektoreinrichtung (wobei die Reflektoreinrichtung auch durch ein Kabelende gebildet werden kann) auf.

Zumindest eine der beiden Koppeleinrichtungen ist galvanisch getrennt am Kabel angeordnet bzw. anordenbar, sodass je nach Ausgestaltung der Koppeleinrichtungen die vorstehend und (1) bis (6) beschriebenen Varianten realisiert werden können.

Für den nicht-beanspruchten Fall, dass eine Koppeleinrichtung sowohl den Impulsgeber als auch den Impulsempfänger aufweist, ist diese Koppeleinrichtung angepasst, einen Impuls in das Kabel einzukoppeln und den eingekoppelten Impuls wieder auszukoppeln (z.B. nachdem der eingekoppelte Impuls von der Reflektoreinrichtung oder am Kabelende reflektiert wurde).

Damit können beispielsweise über die vom jeweiligen Kabelende reflektierten Impulse und die dazugehörigen Impulslaufzeiten zwei Längen bestimmt werden:
1. Länge zwischen der Koppeleinrichtung und dem einen Ende des Kabels (= Länge des einen Teilabschnittes des Kabels), und
2. Länge zwischen der Koppeleinrichtung und dem anderen Ende des Kabels (= Länge des anderen Teilabschnittes des Kabels).

Ist die Bewegungsrichtung des Kabels relativ zur Koppeleinrichtung bekannt (was ebenfalls anhand der Impulslaufzeiten zweier aufeinanderfolgender Impulse ermittelt werden kann), können die gemessenen Längen eindeutig den jeweiligen Kabelenden zugeordnet werden.

An Nahtstellen, Verjüngungen, oder Fehlerstellen des Kabels oder an Stellen, wo eine (passive oder aktive) Reflektoreinrichtung am Kabel angeordnet ist, kann es zu Teilreflexionen des eingekoppelten Impulses kommen. Diese "teilreflektierten" Impulse können ebenfalls von dem Impulsempfänger empfangen bzw. aus dem Kabel ausgekoppelt werden, sodass auch die exakte Position der Nahtstellen, Verjüngungen, oder Fehlerstellen im Kabel bzw. die exakte Position der Reflektoreinrichtung am Kabel ermittelt werden können.

Der Impulsgeber und der Impulsempfänger sind mit einer Auswerteeinrichtung gekoppelt. Die Auswerteeinrichtung kann einerseits das Einkoppeln eines Impulses durch den Impulsgeber steuern. Andererseits kann die Auswerteeinrichtung aus den Impulslaufzeiten die Längen der beiden Teilabschnitte des Kabels ermitteln.

Besonders vorteilhaft an dem erfindungsgemäßen Kabellängenmesssystem und an dem erfindungsgemäßen Verfahren ist die galvanische Trennung, wie oben mit Bezug auf die Varianten (1) bis (6) beschrieben. Dadurch wird es möglich in jedes isolierte elektrisch leitfähige Material (z.B. Adern eines isolierten Kabels) einen Impuls galvanisch getrennt ein- bzw. auszukoppeln bzw. einen Impuls galvanisch getrennt zu reflektieren. Der Impulsgeber und der Impulsempfänger können bei Bedarf räumlich getrennt voneinander an dem Kabel angeordnet werden. Erst diese galvanische Trennung vom Kabel ermöglicht die Messung veränderlicher Längen von Teilabschnitten des Kabels bei gleichbleibender Gesamtlänge des Kabels.

Zudem ist es erfindungsgemäß möglich den Impuls oder die Signale auch in aktive Leiter, d.h. während einer Datenübertragung auf diesen Leitern, einzukoppeln, etwa ein entsprechend frequenzgespreiztes Signal.

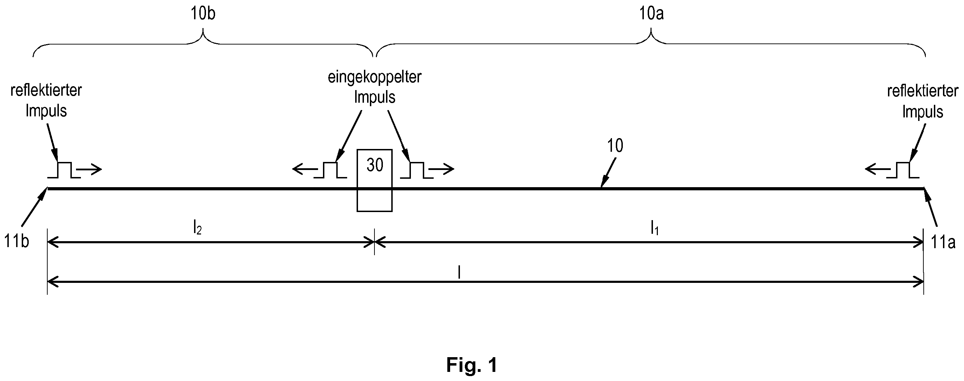

Fig. 1 zeigt ein Kabel 10 mit einer daran angeordneten Koppeleinrichtung 30 eines Kabellängenmesssystems. Die Koppeleinrichtung 30 weist hier einen Impulsgeber und einen Impulsempfänger auf.

Das Kabel 10, welches hier einen Kabelmantel aufweist, weist zwei Enden 11a, 11b auf. Zwischen den beiden Enden 11a, 11b des Kabels 10 ist die Koppeleinrichtung 30 an dem Kabel angeordnet und zwar so, dass die Koppclcinrichtung 30 einen Impuls in das Kabel (d.h. in zumindest eine elektrisch leitfähige Ader des Kabels) einkoppeln kann, wobei die Koppeleinrichtung 30 hier galvanisch getrennt von dem Kabel 10 an dem Kabel angeordnet ist. Der Impuls wird von dem Impulsgeber also galvanisch getrennt in das Kabel eingekoppelt und vom dem Impulsempfänger galvanisch getrennt vom Kabel empfangen bzw. ausgekoppelt.

Das Kabel 10 weist eine Gesamtlänge 1 auf. Die Anordnung der Koppeleinrichtung 30 am Kabel 10 "unterteilt" das Kabel 10 in zwei Teilabschnitte 10a, 10b. Der erste Teilabschnitt 10a ist der Abschnitt des Kabels zwischen der Koppeleinrichtung 30 und dem ersten Ende 11a des Kabels. Der zweite Teilabschnitt 10b ist der Abschnitt des Kabels zwischen der Koppeleinrichtung 30 und dem zweiten Ende 11b des Kabels. Der erste Teilabschnitt 10a weist eine Länge l₁ auf. Der zweite Teilabschnitt 10b weist eine Länge l₂ auf.

Die Koppeleinrichtung 30, d.h. der Impulsgeber der Koppeleinrichtung 30 koppelt galvanisch getrennt vom Kabel 10 einen Impuls (oder ein Signal) in das Kabel ein. Dieser Impuls breitet sich im Kabel in beide Richtungen aus und läuft bis zum jeweiligen Ende 11a, 11b des Kabels 10. An den beiden Enden 11a, 11b des Kabels 10 wird dieser Impuls reflektiert und läuft jeweils zurück zur Koppeleinrichtung 30.

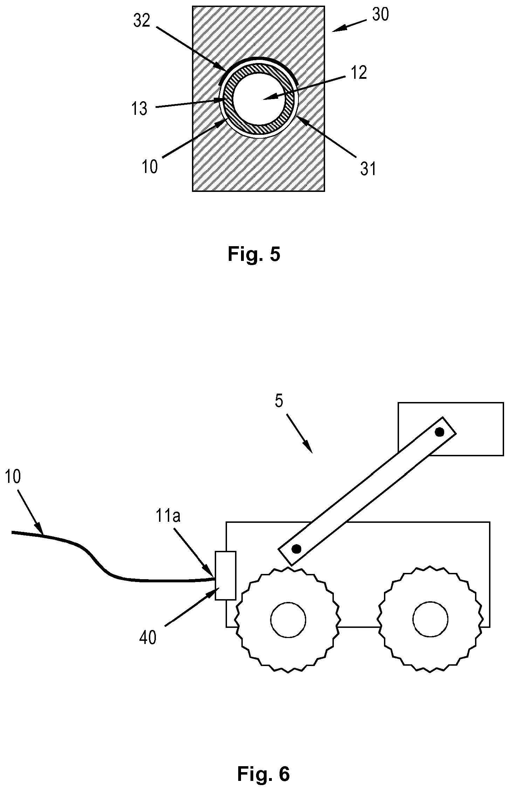

Die beiden Enden des Kabels bilden hier eine Reflektoreinrichtung. An den Enden 11a, 11b kann aber auch eine aktive oder passive Reflektoreinrichtung angeordnet werden, wie beispielsweise mit Bezug auf Fig. 6 erläutert.

Die Koppeleinrichtung 30, d.h. der Impulsempfänger der Koppeleinrichtung 30 ist so ausgestaltet, dass dieser die reflektierten Impulse galvanisch getrennt aus dem Kabel auskoppelt. Aus den jeweiligen Impulslaufzeiten (zwischen dem Einkoppeln des Impulses und dem Auskoppeln des jeweiligen reflektierten Impulses) kann die Länge l₁, l₂ des jeweiligen Teilabschnittes 10a, 10b des Kabels 10 ermittelt werden. Wenn bekannt ist, welcher der beiden Teilabschnitte 10a, 10b der längere Teilabschnitt ist, können die ermittelten Längen l₁, l₂ ohne weitere Maßnahmen eindeutig dem jeweiligen Teilabschnitt zugeordnet werden.

Wird das Kabel 10 relativ zur Koppeleinrichtung 30 bewegt (oder die Koppeleinrichtung 30 relativ zum Kabel 10), was aufgrund der galvanisch getrennten Anordnung der Koppeleinrichtung am Kabel ohne weiteres möglich ist, vergrößert sich die Impulslaufzeit auf dem einen Teilabschnitt während sich die Impulslaufzeit auf dem anderen Teilabschnitt verkleinert. Ist die Bewegungsrichtung des Kabels 10 relativ zur Koppeleinrichtung 30 bekannt, dann können die Impulslaufzeiten dem jeweiligen Ende 11a, 11b und damit dem jeweiligen Teilabschnitt 10a, 10b zugeordnet werden.

Bewegt sich beispielsweise das erste Ende 11a von der Koppeleinrichtung 30 weg, dann vergrößern sich die Impulslaufzeiten von zeitlich nacheinander eingekoppelten Impulsen auf dem ersten Teilabschnitt 10a, während sich die Impulslaufzeiten auf dem zweiten Teilabschnitt 10b verkleinern. Die basierend auf den sich vergrößernden Impulslaufzeiten ermittelten Längen l₁ können dann eindeutig dem ersten Teilabschnitt 10a zugeordnet werden, die basierend auf den sich verkleinernden Impulslaufzeiten ermittelten Längen l₂ können dann eindeutig dem zweiten Teilabschnitt 10b zugeordnet werden.

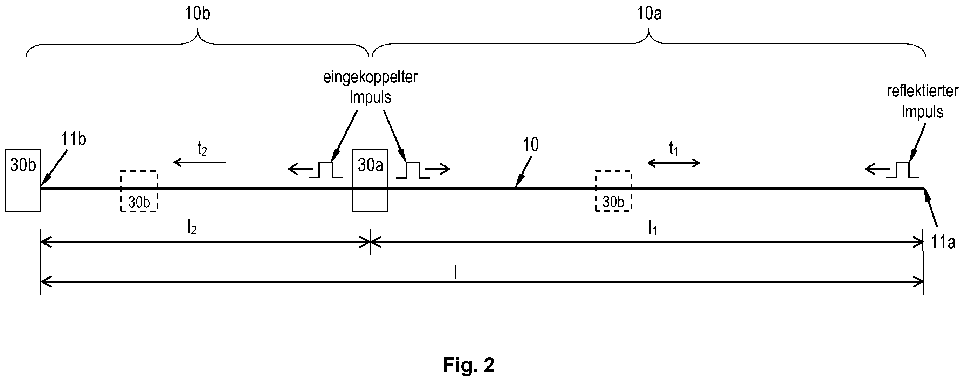

Fig. 2 zeigt ein Kabel 10 mit einem daran angeordneten Impulsgeber 30a (erste Koppeleinrichtung) und einem daran geordneten Impulsempfänger 30b (zweite Koppeleinrichtung) eines Kabellängenmesssystems.

Das Kabel 10, welches auch hier einen Kabelmantel aufweist, weist zwei Enden 11a, 11b auf. Zwischen den beiden Enden 11a, 11b des Kabels 10 ist der Impulsgeber 30a an dem Kabel angeordnet und zwar so, dass er einen Impuls in das Kabel (d.h. in zumindest eine elektrisch leitfähige Ader des Kabels) einkoppeln kann, wobei der Impulsgeber 30a hier galvanisch getrennt von dem Kabel 10 an dem Kabel angeordnet ist. Der Impuls wird also galvanisch getrennt in das Kabel eingekoppelt.

An dem zweiten Ende 11b des Kabels 10 ist der Impulsempfänger 30b angeordnet. Da der Impulsempfänger 30b an dem Kabelende 11b angeordnet ist, kann er auch galvanisch mit dem Kabelende 11b verbunden sein, was insbesondere dann vorteilhaft sein kann, wenn es sich bei dem Impulsempfänger 30b um einen stationären Impulsempfänger handelt und das zweite Ende 11b des Kabels 10 ebenfalls stationär ist, d.h. das zweite Ende 11b des Kabels 10 nicht relativ zum Impulsempfänger 30b bewegt werden muss. Der Impulsempfänger 30b kann aber auch galvanisch getrennt vom Kabel am zweiten Ende 11b des Kabels angeordnet sein.

Ebenso ist es möglich, den Impulsempfänger 30b zwischen dem zweiten Ende 11b des Kabels und dem Impulsgeber 30a an dem Kabel anzuordnen. Entsprechend ist es auch möglich, den Impulsempfänger 30b zwischen dem ersten Ende 11a des Kabels und dem Impulsgeber 30a an dem Kabel anzuordnen. Diese beiden Fälle sind in Fig. 2 durch die gestrichelten Impulsempfänger 30b gezeigt. In diesen beiden Fällen ist es von Vorteil, wenn der jeweilige Impulsempfänger 30b galvanisch getrennt vom Kabel am Kabel angeordnet ist.

Die in Fig. 2 gezeigten Impulsgeber und Impulsempfänger können auch vertauscht werden, d.h. der Impulsgeber wird an dem Kabelende 11b angeordnet und der Impulsempfänger wird zwischen den beiden Enden 11a, 11b des Kabels angeordnet.

Auch ist es möglich beliebig viele Impulsempfänger an dem Kabel anzuordnen, womit auch die Längen von mehr als zwei Teilabschnitten des Kabels ermittelt werden können.

Das Kabel 10 weist eine Gesamtlänge 1 auf.

Zurückkehrend zu der in Fig. 2 gezeigten Anordnung des Impulsgebers 30a und des Impulsempfängers 30b an dem Kabel 10 "unterteilt" der Impulsgebers 30a das Kabel 10 in zwei Teilabschnitte 10a, 10b. Der erste Teilabschnitt 10a ist der Abschnitt des Kabels zwischen dem Impulsgeber 30a und dem ersten Ende 11a des Kabels. Der zweite Teilabschnitt 10b ist der Abschnitt des Kabels zwischen dem Impulsgeber 30a und dem zweiten Ende 11b des Kabels bzw. dem Impulsempfänger 30b. Der erste Teilabschnitt 10a weist eine Länge l₁ auf. Der zweite Teilabschnitt 10b weist eine Länge l₂ auf.

Der Impulsgeber 30a koppelt galvanisch getrennt vom Kabel 10 einen Impuls (oder ein Signal) in das Kabel ein. Dieser Impuls breitet sich im Kabel in beide Richtungen aus und läuft bis zum jeweiligen Ende 11a, 11b des Kabels 10.

An dem ersten Ende 11a des Kabels 10 wird der Impuls reflektiert (das erste Ende des Kabels bildet hier also eine Reflektoreinrichtung) und läuft zurück zum Impulsgeber 30a und von dort weiter bis zum Impulsempfänger 30b, der am zweiten Ende 11b des Kabels angeordnet ist. Dieser am ersten Ende 11a reflektierte Impuls wird dann von dem Impulsempfänger 30b ausgekoppelt bzw. empfangen.

Der Impuls, der sich nach dem Einkoppeln von dem Impulsgeber 30a zum zweiten Ende 11b ausbreitet wird von dem dort angeordneten Impulsempfänger 30b ausgekoppelt bzw. empfangen. Eine mit dem Impulsgeber 30a und mit dem Impulsempfänger 30b verbundene Auswerteeinrichtung kann die Impulslaufzeit t₂ zwischen dem Einkoppeln und dem Auskoppeln dieses Impulses messen, also die Impulslaufzeit t₂, die der Impuls für die Strecke zwischen dem Impulsgeber 30a und dem Impulsempfänger 30b (30a → 30b) benötigt.

Der Impuls, der sich nach Einkoppeln von dem Impulsgeber 30a zum ersten Ende 11a ausbreitet und an dem ersten Ende 11a reflektiert wird, wird ebenfalls (zu einem späteren Zeitpunkt) von dem Impulsempfänger 30b ausgekoppelt bzw. empfangen. Die Auswerteeinrichtung kann die Impulslaufzeit t₁ zwischen dem Einkoppeln und dem Auskoppeln dieses Impulses messen, also die Impulslaufzeit t₁, die der Impuls für die Strecke zwischen dem Impulsgeber 30a zum ersten Ende 11a des Kabels und von dort aus zum Impulsempfänger 30b (30a → 11a → 30b) benötigt.

Aus den beiden Impulslaufzeiten t₁ und t₂ kann die Auswerteeinrichtung die Länge l₁ des ersten Teilabschnittes 10a des Kabels 10 und die Länge l₂ des zweiten Teilabschnittet 10b des Kabels 10 ermitteln.

Die Länge l₂ des zweiten Teilabschnittes 10b kann direkt basierend auf der Impulslaufzeit t₂ ermittelt werden, da sich dieser Impuls direkt vom Impulsgeber 30a zum Impulsempfänger 30b ausbreitet und damit den Impulsempfänger 30b zuerst erreicht.

Die Länge l₁ hingegen kann unter Berücksichtigung der Impulslaufzeit t₂ basierend auf der Impulslaufzeit t₁ ermittelt werden. Da sich der an dem ersten Ende 11a reflektierte Impuls auf dem zweiten Teilabschnitt 10b gleich schnell ausbreitet, wie der Impuls, der sich von dem Impulsgeber 30a direkt zum Impulsempfänger 30b bewegt, kann die Impulslaufzeit Δt von dem Impulsgeber 30a zum ersten Ende 11a und zurück zum Impulsgeber 30a (30a → 11a → 30a) ermittelt werden. Die Impulslaufzeit Δt berechnet sich demnach wie folgt: Δt = t₁ - t₂. Aus der Impulslaufzeit Δt, d.h. aus Δt/2 kann dann die Länge l₁ des ersten Teilabschnittes 10a des Kabels ermittelt werden.

Ist der Impulsempfänger 30b fest mit dem zweiten Ende 11b des Kabels verbunden und wird das Kabel 10 relativ zum Impulsgeber 30a bewegt (etwa beim Auf-/Abwickeln des Kabels von einer Rolle einer Kabeltrommel) vergrößert (beim Abwickeln) bzw. verkleinert (beim Aufwickeln) sich die Impulslaufzeit Δt auf dem ersten Teilabschnitt 10a während sich die Impulslaufzeit t₂ auf dem zweiten Teilabschnitt 10b verkleinert (beim Abwickeln) bzw. vergrößert (beim Aufwickeln). Da sich ein von dem Impulsgeber 30a in das Kabel 10 eingekoppelter Impuls immer in beide Richtungen (zum ersten und zum zweiten Ende 11a, 11b) ausbreitet und der Impuls, der sich von dem Impulsgeber 30a direkt zum zweiten Ende 11b ausbreitet, das zweite Ende immer zeitlich vor dem an dem ersten Ende 11a reflektierten Impuls erreicht, können die Längen der beiden Teilabschnitte 10a, 10b immer unabhängig von der Bewegungsrichtung des Kabels relativ zum Impulsgeber 30a eindeutig bestimmt werden. Zudem können die beiden Längen eindeutig dem jeweiligen Ende 11a, 11b bzw. dem jeweiligen Kabelabschnitt 10a, 11b zugeordnet werden.

Wir der Impuls bzw. werden die Impulse von dem Impulsempfänger 30b ausgekoppelt bzw. empfangen und werden die Laufzeiten der Impulse anhand der vorstehend beschriebenen Methode ermittelt, dann muss der Impulsgeber 30a lediglich dazu angepasst sein, einen Impuls galvanisch getrennt in das Kabel 10 einzukoppeln.

Anstelle des in Fig. 2 gezeigten Impulsgebers 30a kann auch eine Koppeleinrichtung (mit einem Impulsgeber und einem Impulsempfänger) vorgesehen sein. Diese Koppeleinrichtung ist dann angepasst, einen Impuls in das Kabel einzukoppeln und einen Impuls aus dem Kabel auszukoppeln, vorzugsweise jeweils galvanisch getrennt vom Kabel. In dieser Ausgestaltung kann die Länge des zweiten Teilabschnittes 10b anhand des (zeitlich) ersten von dem Impulsgeber 30b empfangenen Impulses ermittelt werden. Die Länge des ersten Teilabschnittes 10a kann anhand des an dem ersten Ende 11b reflektierten und von der Koppeleinrichtung (d.h. von dem Impulsempfänger der Koppeleinrichtung) empfangenen Impulses ermittelt werden.

Sofern gewährleistet ist, dass der eingekoppelte Impuls an dem zweiten Ende 11b nicht reflektiert wird (etwa durch Abschließen des zweiten Endes 11b mit einem entsprechenden Wellenwiderstand) müssen in der Koppeleinrichtung bzw. in der Auswerteinrichtung keine weiteren Maßnahmen vorgesehen werden, um die beiden Impulslaufzeiten t₂ und Δt eindeutig zu messen. Denn der Impulsempfänger der Koppeleinrichtung empfängt nur einen Impuls, nämlich den, der an dem ersten Ende 11a reflektiert wird.

Wird hingegen der Impuls auch an dem zweiten Ende 11b reflektiert, empfängt der Impulsempfänger der Koppeleinrichtung (sofern er nicht exakt zwischen den beiden Enden 11a und 11b angeordnet ist) zwei Impulse. Die Auswerteinrichtung bzw. die Koppeleinrichtung kann so nicht mehr ohne weiteres unterscheiden, welcher der empfangenen Impulse an welchem Kabelende reflektiert wurde.

Dieses Problem lässt sich allerdings überwinden, da die Laufzeit des Impulses von der Koppeleinrichtung bis zum Impulsempfänger 30b eindeutig ermittelt werden kann. Die Impulslaufzeit t₂ von der Koppeleinrichtung bis zum Impulsempfänger 30b ist identisch zur Impulslaufzeit des an dem Impulsempfänger 30b reflektierten und von der Koppeleinrichtung empfangen Impulses. Es gilt also t₂ = t_{(30a→30b)} = t_{(30b→30a)}. Die Auswerteeinrichtung kann nun jene an der Koppeleinrichtung empfangenen Impulse für die Bestimmung der Impulslaufzeit auf dem ersten Teilabschnitt 10a unberücksichtigt lassen, deren Impulslaufzeiten die Bedingung
*n* • t₂ mit *n* = 2 oder ein Vielfaches von 2
erfüllen. Sobald ein Impuls an der Koppeleinrichtung empfangen wird, dessen Impulslaufzeit verschieden von *n* • t₂ ist, handelt es sich um einen an dem ersten Ende 1 1a reflektierten Impuls. Mit der sich daraus ergebenden Impulslaufzeit kann nun die Länge l₁ des ersten Teilabschnittes 10a ermittelt werden.

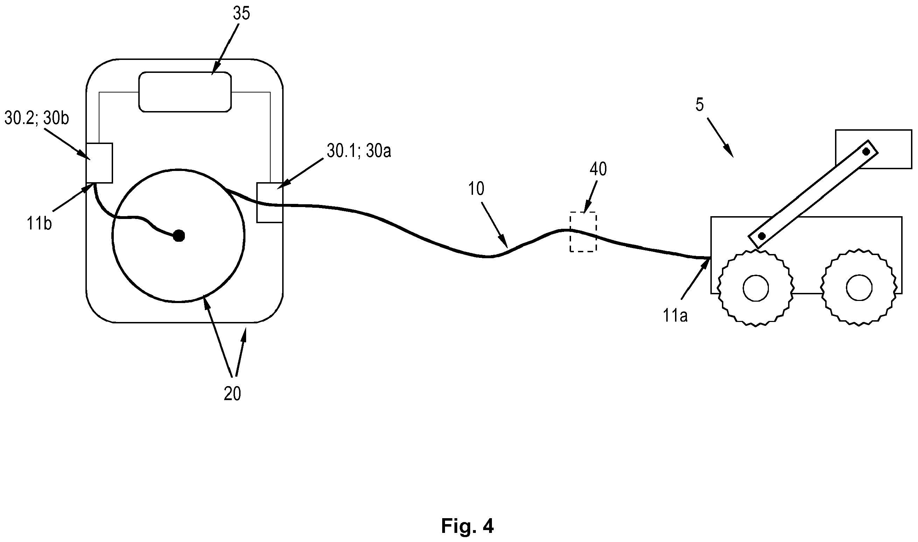

In der Praxis, insbesondere bei Kanalinspektionssystemen, bei denen eine Inspektionseinheit mit einem Kabel verbunden ist, ist die Gesamtlänge 1 des Kabels in der Regel bekannt (siehe auch Fig. 4). Unter dieser Voraussetzung kann aus der Impulslaufzeit des von dem Impulsgeber 30a bzw. von der Koppeleinrichtung eingekoppelten Impulses zwischen dem Impulsgeber 30a / Koppeleinrichtung und dem Impulsempfänger 30b (30a → 30b) die Länge l₂ des zweiten Teilabschnittes 10b ermittelt werden. Die Länge l₁ des ersten Teilabschnittes 10a entspricht dann der bekannten Gesamtlänge l abzüglich der Länge l₂ (l₁ = 1 - l₂).

Ist die Gesamtlänge 1 des Kabels 10 nicht bekannt, so kann anstelle des an dem zweiten Ende 11b des Kabels angeordneten Impulsempfängers 30b auch eine Koppeleinrichtung (aufweisend einen Impulsgeber und einen Impulsempfänger) vorgesehen sein (wobei das zweite Ende 11b nicht relativ zu dieser Koppeleinrichtung bewegbar ist), mit der ein Impuls in das Kabel eingekoppelt werden kann. Der eingekoppelte Impuls wird dann an dem ersten Ende 11a reflektiert und von der an dem zweiten Ende 11b angeordneten Koppeleinrichtung empfangen. Aus der halben Gesamtlaufzeit dieses Impulses kann dann die Gesamtlänge 1 des Kabels 10 ermittelt werden.

Vorteilhaft hierbei ist, dass mit einem einzigen von der an dem zweiten Ende 11b angeordneten Koppeleinrichtung eingekoppelten Impuls sowohl die Gesamtlänge 1 des Kabels 10 als auch die Länge l₂ des Teilabschnittes 10b ermittelt werden kann. Denn der von der am zweiten Ende 11b angeordneten Koppeleinrichtung 30b eingekoppelte Impuls wird zunächst auch von der zwischen den beiden Enden 11a, 11b angeordneten Koppeleinrichtung empfangen, sodass aus der Impulslaufzeit zwischen den beiden Koppeleinrichtungen die Länge l₂ des Teilabschnittes 10b ermittelt werden kann.

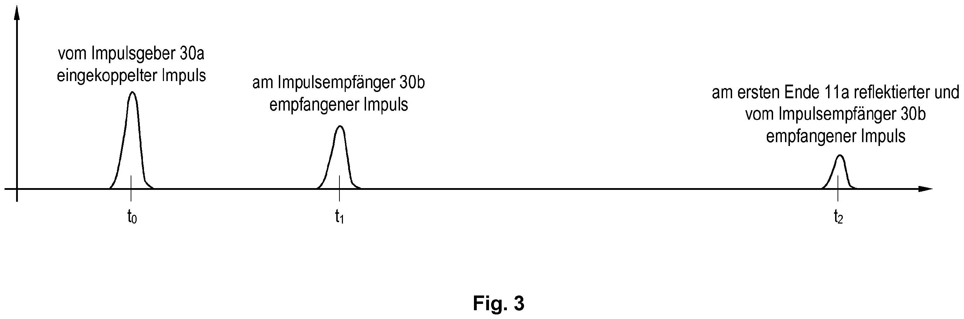

**Fig. 3** zeigt die Änderung eines in ein Kabel eingekoppelten Impulses über die Zeit für die in Fig. 2 gezeigte Anordnung des Impulsgebers 30a und des Impulsempfängers 30b an dem Kabel 10.

Bei der in Fig. 2 gezeigten Anordnung ist der Abstand zwischen dem Impulsgeber 30a und dem Impulsempfänger 30b wesentlich kleiner als der Abstand zwischen dem Impulsgeber 30a und dem ersten Ende 11a des Kabels 10.

Der von dem Impulsgeber 30a zum Zeitpunkt to eingekoppelte Impuls wird zum Zeitpunkt t₁ von dem Impulsempfänger 30b empfangen. Während sich der Impuls von dem Impulsgeber 30a zum Impulsempfänger 30b ausbreitet, wird er gedämpft bzw. verliert Energie.

Der Impuls, der sich von dem Impulsgeber 30a zum ersten Ende 11a hin ausbreitet und dort reflektiert wird, wird von dem Impulsempfänger 30b zum Zeitpunkt t₂ empfangen. Die längere Impulslaufzeit geht mit einer größeren Dämpfung bzw. mit einem größeren Energieverlust des Impulses einher, sodass der zum Zeitpunkt t₂ empfangene Impuls deutlich schwacher ist als der zum Zeitpunkt t₁ empfangene Impuls.

Bei langen Kabeln und/oder bei kleinen eingekoppelten Impulsen kann es daher vorkommen, dass der eingekoppelte (und gegebenenfalls reflektierte) Impuls von dem Impulsempfänger nicht mehr erkannt bzw. detektiert werden kann. In diesem Fall kann es vorteilhaft sein an einem Ende des Kabels eine aktive Reflektoreinrichtung vorzusehen, mit der der an diesem Ende des Kabels ankommende Impuls ausgekoppelt und verstärkt wird und mit der dieser verstärkte Impuls wieder in das Kabel eingekoppelt wird. Die Verarbeitungszeit für das Auskoppeln und Verstärken des Impulses ist in der Regel bekannt und kann daher bei der Ermittlung der Impulslaufzeit berücksichtigt bzw. in Abzug gebracht werden. Ein Beispiel hierzu ist mit Bezug auf Fig. 6 gezeigt.

Eine solche aktive Reflektoreinrichtung kann auch zwischen dem Impulsgeber und dem Impulsempfänger angeordnet werden, sodass der von dem Impulsgeber eingekoppelt Impuls von der aktiven Reflektoreinrichtung ausgekoppelt und verstärkt wieder eingekoppelt werden kann. Der Impulsempfänger empfängt hierbei entweder
- zwei Impulse, nämlich den ursprünglichen Impuls und zeitlich versetzt (aufgrund der Verarbeitung durch die Reflektoreinrichtung) den verstärkten Impuls, oder
- nur einen Impuls, nämlich den verstärkten Impuls.

Im ersten Fall kann die Impulslaufzeit anhand des ursprünglichen Impulses oder anhand des zweiten (verstärkten) Impulses unter Berücksichtigung der Verarbeitungszeit durch die Reflektoreinrichtung ermittelt werden.

Im zweiten Fall kann die Impulslaufzeit anhand des empfangen Impulses unter Berücksichtigung der Verarbeitungszeit durch die Reflektoreinrichtung ermittelt werden (sofern bekannt ist, dass eine Reflektoreinrichtung vorgesehen ist und nur ein Impuls empfangen wird, handelt es sich um einen durch die Reflektoreinrichtung verstärkten Impuls).

Eine solche aktive Reflektoreinrichtung kann also vom Prinzip her wie eine Koppeleinrichtung ausgestaltet sein, die einen Impulsgeber und einen Impulsempfänger aufweist. Der Impulsempfänger und der Impulsgeber wirken mittels einer Verstärkereinrichtung so zusammen, dass der Impulsgeber den von dem Impulsempfänger empfangenen Impuls in verstärkter Form in das Kabel einkoppelt.

Ist eine solche Reflektoreinrichtung am Kabelende angeordnet, kann sie galvanisch mit dem Kabel gekoppelt sein. Ist eine solche Reflektoreinrichtung zwischen den beiden Kabelenden angeordnet, ist es vorteilhaft sein, wenn sie galvanisch getrennt vom Kabel mit dem Kabel gekoppelt ist.

**Fig. 4** zeigt ein Inspektions- und/oder Wartungssystem mit einer erfindungsgemäßen Kabeltrommel mit einem Kabellängenmesssystem. Das Inspektions- und/oder Wartungssystem 5 wird nachfolgend als Inspektionssystem 5 bezeichnet.

Das Inspektionssystem 5 zur Inspektion und/oder Wartung von Kanälen oder Rohren weist hier einen Fahrwagen auf, der in einem Kanal verfahren werden kann. Auf dem Fahrwagen sind Inspektionsmittel, etwa eine Kamera mit Beleuchtungsmittel angeordnet. Die Kamera ist hier an einem Hebearm angeordnet.

Über ein ummanteltes Kabel 10 wird der Fahrwagen mit elektrischer Energie versorgt. Ferner kann über das Kabel 10 auch eine Datenübertragung zwischen dem Fahrwagen und einer (hier nicht gezeigten) Kontrolleinrichtung außerhalb des Kanals abgewickelt werden. Das Kabel 10 wird hierzu aus dem Kanal bzw. Kanalschacht herausgeführt.

Das Kabel 10 selbst ist hier auf einer Rolle einer Kabeltrommel 20 aufgewickelt. Bewegt sich der Fahrwagen in den Kanal hinein wird das Kabel von der Rolle der Kabeltrommel abgewickelt und von dem Fahrwagen in den Kanal gezogen. Bewegt sich der Fahrwagen aus dem Kanal heraus, dann wird das Kabel wieder auf die Trommel aufgewickelt.

Erfindungsgemäß ist nun möglich, die Länge des von der Rolle der Kabeltrommel abgewickelten Kabelabschnittes zu ermitteln, um so die Position des Fahrwagens in dem Kanal zu bestimmen.

In einer Ausgestaltung kann hierzu an der Kabeltrommel 20 eine erste Koppeleinrichtung 30.1 angeordnet sein, vorzugsweise am Auslauf der Kabeltrommel. Die erste Koppeleinrichtung 30.1 ist so ausgestaltet und an der Kabeltrommel angeordnet, dass das Kabel 10 beim Auf- bzw. Abwickeln an der ersten Koppeleinrichtung 30.1 vorbeiläuft bzw. vorbeigeführt wird. Da die Impulse von der ersten Koppeleinrichtung 30.1 galvanisch getrennt durch den Kabelmantel hindurch in das Kabel 10 eingekoppelt bzw. ausgekoppelt werden, kann das Kabel berührungsfrei an der ersten Koppeleinrichtung 30.1 vorbeigeführt werden. Zusätzlich können Führungsmittel, etwa Führungsrollen vorgesehen sein, mit denen gewährleistet wird, dass der Kabel 10 immer mit gleichbleibenden Abstand an der ersten Koppeleinrichtung 30.1 vorbeigeführt wird.

Der von der ersten Koppeleinrichtung 30.1 am Auslauf der Kabeltrommel in das Kabel 10 eingekoppelte Impuls breitet sich in beide Richtungen zu den jeweiligen Enden 11a, 11b im Kabel aus. Der Impuls wird an dem ersten Ende 11a reflektiert und kann dann von der ersten Koppeleinrichtung 30.1 empfangen bzw. aus dem Kabel ausgekoppelt werden. Aus der Impulslaufzeit zwischen der ersten Koppeleinrichtung 30.1 und dem ersten Ende 11a des Kabels kann dann die Länge des von der Kabeltrommel abgewickelten Kabelabschnittes ermittelt werden, d.h. die Länge des Kabels zwischen dem Auslauf der Kabeltrommel bis zum Fahrwagen. Ist die Länge des Kabels vom Auslauf der Kabeltrommel bis zum Boden des Kanalschachtes bekannt (die ebenfalls mit der erfindungsgemäßen Kabeltrommel mit Kabellängenmesssystem ermittelt werden kann), kann so die aktuelle Position des Fahrwagens in dem Kanal bestimmt werden.

Das zweite Ende 11b des Kabels 10 kann mit einem entsprechenden Wellenwiderstand abgeschlossen werden, um ein Reflektieren des Impulses an diesem Ende zu verhindern.

Erfindungsgemäß ist an der Kabeltrommel 20 zusätzlich zur ersten Koppeleinrichtung 30.1 auch eine zweite Koppeleinrichtung 30.2 angeordnet sein. Die zweite Koppeleinrichtung 30.2 kann ebenfalls an der Kabeltrommel 20 angeordnet sein und ist mit dem zweiten Ende 11b des Kabels verbunden. Die zweite Koppeleinrichtung 30.2 kann ebenfalls galvanisch getrennt von dem Kabel 10 sein oder auch galvanisch mit dem Kabelende 1 1b gekoppelt sein.

Die erste Koppeleinrichtung 30.1 koppelt einen Impuls in das Kabel 10 ein, der sich in beide Richtung zu beiden Kabelenden 11a, 11b hin ausbreitet. Wie mit Bezug auf Fig. 2 erläutert, können mit den beiden Koppeleinrichtungen 30.1, 30.2 die Längen der beiden Teilabschnitte des Kabels (d.h. des abgewickelten und des noch aufgewickelten Abschnittes) ermittelt werden.

Bei beiden Ausgestaltungen sind die Koppeleinrichtungen 30.1, 30.2 mit einer Auswerteeinrichtung 35 verbunden. Die Auswerteeinrichtung 35 ist einerseits angepasst, die Beaufschlagung des Kabels mit einem Impuls durch die erste und/oder durch die zweite Koppeleinrichtung zu steuern. Andererseits ist die Auswerteeinrichtung 35 angepasst, die Impulslaufzeiten zu ermitteln und aus den Impulslaufzeiten die Längen der einzelnen Kabelabschnitte bzw. die Gesamtlänge des Kabels zu ermitteln.

Um während des Ab- und Aufwickelns des Kabels von der bzw. auf die Kabeltrommel fortwährend die aktuelle Länge des abgewickelten Abschnittes zu ermitteln, ist es erfindungsgemäß vorgesehen, wenn eine entsprechende Längenmessung in zyklischen zeitlichen Abständen erfolgt. D.h., dass das Kabel in zeitlichen Abständen mit entsprechenden Impulsen beaufschlagt wird bzw. entsprechende Impulse in das Kabel eingekoppelt werden.

Der zeitliche Abstand zwischen zwei Einkoppelvorgängen wird vorzugsweise so gewählt, dass gegebenenfalls die Echos aller früheren Impulse abgeklungen sind.

Zwischen den beiden Enden des Kabels 10 kann auch eine Reflektoreinrichtung 40 angeordnet sein, die als aktive oder als passive Reflektoreinrichtung ausgestaltet sein kann.

Unter einer aktiven Reflektoreinrichtung wird eine Reflektoreinrichtung verstanden, die einen Impuls aus dem Kabel auskoppelt, ihn gegebenenfalls verstärkt und den verstärkten Impuls wieder in das Kabel einkoppelt.

Unter einer passiven Reflektoreinrichtung wird eine Reflektoreinrichtung verstanden, die an der Stelle im Kabel, an der sie angeordnet ist, eine Impedanzänderung im Kabel hervorruft, welche eine Reflexion oder Teilreflexion des Impulses bewirkt.

Beide Arten von Reflektoreinrichtungen können sowohl galvanisch getrennt vom Kabel mit dem Kabel gekoppelt sein oder galvanisch mit dem Kabel gekoppelt sein.

Mit Hilfe der an dem Kabel 10 angeordneten Reflektoreinrichtung 40 kann etwa die Länge des Abschnittes zwischen der ersten Koppeleinrichtung 30.1 und der Reflektoreinrichtung 40 ermittelt werden.

Bei der in Fig. 4 gezeigten Ausgestaltung kann anstelle der ersten Koppeleinrichtung 30.1 auch ein Impulsgeber 30a (bzw. eine Koppeleinrichtung, die nur einen Impulsgeber aufweist) vorgesehen sein. Anstelle der zweiten Koppeleinrichtung 30.2 kann auch ein Impulsempfänger 30b (bzw. eine Koppeleinrichtung, die nur einen Impulsempfänger aufweist) vorgesehen sein.

In einer alternativen Ausgestaltung des in Fig. 4 gezeigten Systems kann anstelle der ersten Koppeleinrichtung 30.1 auch ein Impulsempfänger (bzw. eine Koppeleinrichtung, die nur einen Impulsempfänger aufweist) vorgesehen sein. Anstelle der zweiten Koppeleinrichtung 30.2 kann auch ein Impulsgeber (bzw. eine Koppeleinrichtung, die nur einen Impulsgeber aufweist) vorgesehen sein.

**Fig. 5** zeigt eine Ausführungsform einer Koppeleinrichtung 30 einer erfindungsgemäßen Kabeltrommel mit Kabellängenmesssystem.

Die Koppeleinrichtung 30 weist hier ein Gehäuse auf, in dem eine Kabelführung 31 vorgesehen ist. Durch die Kabelführung 31 kann das Kabel 10 durch das Gehäuse hindurch geführt werden. In dem Gehäuse kann eine Elektronik zum Erzeugen von Impulsen vorgesehen sein, die in das Kabel einzukoppeln sind. In der Wandung bzw. an der Wandung der Kabelführung 31 ist ein Einkoppelmittel 32 vorgesehen, mit dem die von Elektronik der Koppeleinrichtung 30 erzeugten Impulse durch die Isolierung 13 des Kabels hindurch in das elektrisch Leitfähige Material des Kabels (Adern) eingekoppelt werden können.

Über dieses Einkoppelmittel 32 können auch Impulse aus dem Kabel 10 ausgekoppelt bzw. detektiert werden, d.h. das Einkoppelmittel wird auch als Auskoppelmittel verwendet. Das Ein-/Auskoppelmittel 32 ist hierzu mit einer entsprechenden Detektor-Elektronik verbunden. Die Elektronik zum Erzeugen der Impulse und die Detektor-Elektronik können über einen Multiplexer mit dem Ein-/Auskoppelmittel 32 verbunden sein.

Alternativ hierzu kann auch ein von dem Einkoppelmittel separates Auskoppelmittel vorgesehen werden, das ebenfalls an bzw. in der Wandung der Kabelführung 31 angeordnet ist. Auf eine Multiplexeinrichtung kann dann verzichtet werden.

Die Elektronik zum Erzeugen des Impulses und die Detektorelektronik können auch in der Auswerteeinrichtung 35 vorgesehen sein, sodass die Koppeleinrichtungen selbst nur die entsprechenden Ein-/Auskoppelmitteln aufweisen muss.

Selbstverständlich können die Koppeleinrichtungen auch andere Formen aufweisen. Wichtig ist lediglich, dass das Kabel (mit einem möglichst geringen Abstand) an den Ein-/Auskoppelmitteln vorbeiführbar ist.

Der Impuls kann beispielsweise induktiv über eine Spule oder über einen parallel zum Kabel verlaufenden Draht in das Kabel eingekoppelt werden. Alternativ kann der Impuls auch kapazitiv über entsprechende Koppelplatten oder ähnliches in das Kabel eingekoppelt werden.

**Fig. 6** zeigt einen Inspektionswagen eines Inspektionssystems 5 mit einer aktiven Reflektoreinrichtung 40 eines an einer erfindungsgemäßen Kabeltrommel angeordneten Kabellängenmesssystems.

Wie vorstehend mit Bezug zu Fig. 3 erläutert, kann eine sehr große Kabellänge bzw. eine sehr große Länge des zu messenden Kabelabschnittes dazu führen, dass der reflektierte Impuls, wenn er am Impulsempfänger ankommt, zu schwach ist, um vom Impulsempfänger (eindeutig) detektiert zu werden. Hierzu kann an einem Ende des Kabels eine aktive Reflektoreinrichtung 40 vorgesehen werden, mit der der an diesem Ende ankommende Impuls ausgekoppelt, verstärkt und als verstärkter Impuls wieder in das Kabel bzw. in diesem Ende des Kabels eingekoppelt werden kann.

Bei der in Fig. 6 gezeigten Ausgestaltung ist die aktive Reflektoreinrichtung 40 an dem Fahrwagen angeordnet und mit dem ersten Ende 11a des Kabels 10 verbunden.

Die Verarbeitungszeit für das Auskoppeln des Impulses und für die Verstärkung des Impulses durch die aktive Reflektoreinrichtung ist in der Regel bekannt. Die Verarbeitungszeit kann dann von gesamten Impulslaufzeit abgezogen werden, sodass sich die reine Impulslaufzeit ergibt, aus der die Länge des entsprechenden Kabelabschnittes ermittelt werden kann.

Mit der erfindungsgemäßen Kabeltrommel mit Kabellängenmesssystem können nicht nur Längen von Kabeln oder Kabelabschnitte galvanisch getrennt vom Kabel gemessen werden. Es ist auch möglich, Nahtstellen, Verjüngungen, oder Fehlerstellen im Kabel galvanisch getrennt vom Kabel zu ermitteln, da es an diesen Stellen aufgrund von Impedanzänderungen zu Teilreflexionen des eingekoppelten Impulses kommt. Weist das Kabel zwischen der Einkoppelstelle und dem Kabelende solche Impedanzänderungen auf, führt dies dazu, dass der eingekoppelte Impuls mehrfach reflektiert wird (z.B. eine Teilreflektion an der fehlerhaften Stelle und eine Reflektion an dem Kabelende). Dies hat zur Folge, dass der Impulsempfänger zu einem eingekoppelten Impuls auch mehrere reflektierte Impulse detektiert. Aufgrund unterschiedlicher Impulslaufzeiten kann die Auswerteeinrichtung die Impulslaufzeiten eindeutig den fehlerhaften Stellen und dem Kabelende zuordnen (der reflektierte Impuls mit der längsten Impulslaufzeit wird dem Kabelende zugeordnet).

Damit können mit einem einzigen eingekoppelten Impuls neben der reinen Längenmessung auch Impedanzänderungen im Kabel (d.h. die Positionen dieser Impedanzänderungen im Kabel) galvanisch getrennt vom Kabel ermittelt werden.

### Bezugszeichen:

- 5: Inspektions- und/oder Wartungseinrichtung
- 10: Kabel (isoliertes elektrisch leitfähiges Kabel)
- 10a: erster Teilabschnitt des Kabels 10
- 10b: zweiter Teilabschnitt des Kabels 10
- 11a: erstes Ende des Kabels 10
- 11b: zweites Ende des Kabels 10
- 12: elektrisch leitfähiges Material (Adern des Kabels 10)
- 13: Isolierung
- 20: Kabeltrommel
- 30: Koppeleinrichtung
- 30.1: erste Koppeleinrichtung
- 30.2: zweite Koppeleinrichtung
- 30a: Impulsgeber
- 30b: Impulsempfänger
- 31: Kabelführung
- 32: Ein-/Auskoppelmittel
- 35: Auswerteeinrichtung (Auswerteelektronik)
- 40: Reflektoreinrichtung (aktiv / passiv)
- l: Länge des Kabels 10
- l₁: Länge des ersten Teilabschnittes 10a des Kabels 10
- l₂: Länge des zweiten Teilabschnittes 10b des Kabels 10
- t₁...tₙ: Zeitpunkte / Impuls- bzw. Signallaufzeiten

## Patentansprüche

1. Kabeltrommel (20) zum Auf- und Abwickeln eines elektrisch leitfähigen Kabels (10) mit einem abwickelbaren Ende (11a) und einem nicht abwickelbaren Ende (11b), wobei an der Kabeltrommel ein Kabellängenmesssystem zum Messen einer Länge (l₁, l₂) zumindest eines Teilabschnittes (10a, 10b) des elektrisch leitfähigen Kabels (10) angeordnet ist, wobei das Kabellängenmesssystem mindestens einen Impulsgeber (30a) und mindestens einen Impulsempfänger (30b) aufweist und wobei das Kabellängenmesssystem ferner aufweist:
- eine erste Koppeleinrichtung (30.1) und eine zweite Koppeleinrichtung (30.2), wobei
- die erste Koppeleinrichtung (30.1) den Impulsgeber (30a) und
- die zweite Koppeleinrichtung (30.2) den Impulsempfänger (30b) aufweist,
- eine Reflektoreinrichtung (40), und
- eine Auswerteeinrichtung (35), die operativ mit dem Impulsgeber (30a) und mit dem Impulsempfänger (30b) verbunden ist,
wobei
- der Impulsgeber (30a) angepasst ist, einen Impuls in das Kabel (10) einzukoppeln,
- der Impulsempfänger (30b) angepasst ist, den von dem Impulsgeber (30a) in das Kabel eingekoppelten Impuls zu empfangen, und
- die Reflektoreinrichtung (40) an dem abwickelbaren Ende (11a) des Kabels (10) angeordnet ist und angepasst ist, den von dem Impulsgeber (30a) in
das Kabel eingekoppelten Impuls zumindest teilweise zu reflektieren, wobei die Auswerteeinrichtung (35) angepasst ist, aus den Impulslaufzeiten der von dem Impulsgeber (30a) in das Kabel (10) eingekoppelten und von dem Impulsempfänger (30b) empfangenen Impulsen die Länge (l₁, l₂) des zumindest einen Teilabschnittes (10a, 10b) des Kabels zu bestimmen,
wobei
- die erste Koppeleinrichtung (30.1) des Kabellängenmesssystems so an der Kabeltrommel (20) angeordnet ist, dass das Kabel (10) beim Abwickeln von der Trommel und/oder beim Aufwickeln auf die Trommel an der ersten Koppeleinrichtung (30.1) vorbei oder durch die erste Koppeleinrichtung (30.1) hindurch geführt wird, wobei die erste Koppeleinrichtung (30.1) galvanisch getrennt vom Kabel (10) am Kabel anordenbar ist, und die zweite Koppeleinrichtung (30.2) operativ mit dem nicht abwickelbaren Ende (11b) des Kabels (10) gekoppelt ist, oder
- die zweite Koppeleinrichtung (30.2) des Kabellängenmesssystems so an der Kabeltrommel (20) angeordnet ist, dass das Kabel (10) beim Abwickeln von der Trommel und/oder beim Aufwickeln auf die Trommel an der zweiten Koppeleinrichtung (30.2) vorbei oder durch die zweite Koppeleinrichtung (30.2) hindurch geführt wird, wobei die zweite Koppeleinrichtung (30.2) galvanisch getrennt vom Kabel (10) am Kabel anordenbar ist, und die erste Koppeleinrichtung (30.1) operativ mit dem nicht abwickelbaren Ende (11b) des Kabels (10) gekoppelt ist.

2. Kabeltrommel nach dem vorhergehenden Anspruch, wobei die Reflektoreinrichtung (40) eine aktive Reflektoreinrichtung ist und angepasst ist, den von dem Impulsgeber (30a) in das Kabel (10) eingekoppelten Impuls zu empfangen und den empfangenen Impuls in das Kabel einzukoppeln.

3. Kabeltrommel nach dem vorhergehenden Anspruch, wobei die aktive Reflektoreinrichtung (40) angepasst ist, den empfangenen Impuls zu verstärken und den verstärkten Impuls in das Kabel (10) einzukoppeln.

4. Kabeltrommel nach einem der beiden vorhergehenden Ansprüche, wobei die aktive Reflektoreinrichtung (40) einen Impulsgeber (30a) und einen Impulsempfänger (30b) aufweist.

5. Kabeltrommel nach Anspruch 1, wobei die Reflektoreinrichtung (40) eine passive Reflektoreinrichtung ist und angepasst ist, an einer vorbestimmten Stelle im Kabel eine Impedanzänderung hervorzurufen.

## Claims

1. Cable reel (20) for winding and unwinding an electrically conductive cable (10) having an unwindable end (11a) and a non-unwindable end (11b), wherein a cable length measuring system for measuring a length (l₁, l₂) of at least one portion (10a, 10b) of the electrically conductive cable (10) is arranged on the cable reel, wherein the cable length measuring system comprises at least one pulse generator (30a) and at least one pulse receiver (30b) and wherein the cable length measuring system further comprises:
- a first coupling device (30.1) and a second coupling device (30.2), wherein
- the first coupling device (30.1) comprises the pulse generator (30a) and
- the second coupling device (30.2) comprises the pulse receiver (30b),
- a reflector device (40), and
- an evaluation device (35) which is operatively connected to the pulse generator (30a) and the pulse receiver (30b),
wherein
- the pulse generator (30a) is adapted to couple a pulse into the cable (10),
- the pulse receiver (30b) is adapted to receive the pulse coupled into the cable by the pulse generator (30a), and
- the reflector device (40) is arranged on the unwindable end (11a) of the cable (10) and is adapted to at least partially reflect the pulse coupled into the cable by the pulse generator (30a),
wherein the evaluation device (35) is adapted to determine the length (l₁, l₂) of the at least one portion (10a, 10b) of the cable from the pulse transit times of the pulses coupled into the cable (10) by the pulse generator (30a) and received by the pulse receiver (30b),
wherein
- the first coupling device (30.1) of the cable length measuring system is arranged on the cable reel (20) in such a way that the cable (10) is guided past the first coupling device (30.1) or through the first coupling device when it is unwound from the reel and/or when it is wound onto the reel (30.1), wherein the first coupling device (30.1) can be arranged on the cable so as to be electrically isolated from the cable (10), and the second coupling device (30.2) is operatively coupled to the non-unwindable end (11b) of the cable (10), or
- the second coupling device (30.2) of the cable length measuring system is arranged on the cable reel (20) in such a way that the cable (10) is guided past the second coupling device (30.2) or through the second coupling device when it is unwound from the reel and/or when it is wound onto the reel (30.2), wherein the second coupling device (30.2) can be arranged on the cable so as to be electrically isolated from the cable (10), and the first coupling device (30.1) is operatively coupled to the non-unwindable end (11b) of the cable (10).

2. Cable reel according to the preceding claim, wherein the reflector device (40) is an active reflector device and is adapted to receive the pulse coupled into the cable (10) by the pulse generator (30a) and to couple the received pulse into the cable.

3. Cable reel according to the preceding claim, wherein the active reflector device (40) is adapted to amplify the received pulse and to couple the amplified pulse into the cable (10).

4. Cable reel according to either of the two preceding claims, wherein the active reflector device (40) has a pulse generator (30a) and a pulse receiver (30b).

5. Cable reel according to claim 1, wherein the reflector device (40) is a passive reflector device and is adapted to produce a change in impedance at a predetermined point in the cable.

## Revendications

1. Tambour de câble (20) permettant d'enrouler et de dérouler un câble (10) électriquement conducteur comportant une extrémité déroulable (11a) et une extrémité non déroulable (11b), un système de mesure de longueur de câble permettant de mesurer une longueur (l₁, l₂) d'au moins une section partielle (10a, 10b) du câble (10) électriquement conducteur étant disposé sur le tambour de câble, le système de mesure de longueur de câble présentant au moins un générateur d'impulsions (30a) et au moins un récepteur d'impulsions (30b) et le système de mesure de longueur de câble présentant en outre :
- un premier dispositif de couplage (30.1) et un second dispositif de couplage (30.2),
- le premier dispositif de couplage (30.1) présentant le générateur d'impulsions (30a) et
- le second dispositif de couplage (30.2) présentant le récepteur d'impulsions (30b),
- un dispositif réflecteur (40), et
- un dispositif d'évaluation (35) qui est connecté de manière fonctionnelle au générateur d'impulsions (30a) et au récepteur d'impulsions (30b),
- le générateur d'impulsions (30a) étant adapté pour coupler une impulsion dans le câble (10),
- le récepteur d'impulsions (30b) étant adapté pour recevoir l'impulsion couplée dans le câble par le générateur d'impulsions (30a), et
- le dispositif réflecteur (40) étant disposé sur l'extrémité déroulable (11a) du câble (10) et étant adapté pour réfléchir au moins partiellement l'impulsion couplée dans le câble par le générateur d'impulsions (30a),
le dispositif d'évaluation (35) étant adapté pour déterminer la longueur (l₁, l₂) de l'au moins une section partielle (10a, 10b) du câble à partir du temps de trajet d'impulsion de l'impulsion couplée dans le câble (10) par le générateur d'impulsions (30a) et reçue par le récepteur d'impulsions (30b),
- le premier dispositif de couplage (30.1) du système de mesure de longueur de câble étant disposé sur le tambour de câble (20) de telle sorte que le câble (10) est guidé au-delà du premier dispositif de couplage (30.1) ou à travers le premier dispositif de couplage (30.1) lorsqu'il est déroulé du tambour et/ou lorsqu'il est enroulé sur le tambour, le premier dispositif de couplage (30.1) pouvant être disposé sur le câble de manière à être isolé galvaniquement du câble (10), et le second dispositif de couplage (30.2) étant couplé de manière fonctionnelle à l'extrémité non déroulable (11b) du câble (10), ou
- le second dispositif de couplage (30.2) du système de mesure de longueur de câble étant disposé sur le tambour de câble (20) de telle sorte que le câble (10) est guidé au-delà du second dispositif de couplage (30.2) ou à travers le second dispositif de couplage (30.2) lorsqu'il est déroulé du tambour et/ou lorsqu'il est enroulé sur le tambour, le second dispositif de couplage (30.2) pouvant être disposé sur le câble de manière à être isolé galvaniquement du câble (10), et le premier dispositif de couplage (30.1) étant couplé de manière fonctionnelle à l'extrémité non déroulable (11b) du câble (10).

2. Tambour de câble selon la revendication précédente, dans lequel le dispositif réflecteur (40) est un dispositif réflecteur actif et est adapté pour recevoir l'impulsion couplée dans le câble (10) par le générateur d'impulsions (30a) et pour coupler l'impulsion reçue dans le câble.

3. Tambour de câble selon la revendication précédente, dans lequel le dispositif réflecteur (40) actif est adapté pour amplifier l'impulsion reçue et pour coupler l'impulsion amplifiée dans le câble (10).

4. Tambour de câble selon l'une des deux revendications précédentes, dans lequel le dispositif réflecteur (40) actif présente un générateur d'impulsions (30a) et un récepteur d'impulsions (30b).

5. Tambour de câble selon la revendication 1, dans lequel le dispositif réflecteur (40) est un dispositif réflecteur passif et est adapté pour provoquer un changement d'impédance à un point prédéfini dans le câble.
